# EUROPEAN PATENT APPLICATION

(11) **EP 1 968 001 A2**
(43) Date of publication of application: **10.09.2008**
(21) Application number: 08152295.5
(22) Date of filing: 05.03.2008
(51) Int. Cl.: G06Q 30/00

(54) **A method and system for providing sponsored content on an electronic device**

(30) Priority: 09.03.2007 US 906082 P; 04.01.2008 US 969837
(71) Applicant: Samsung Electronics Co., Ltd., Suwon-si, Gyeonggi-do 442-742 (KR)
(72) Inventor: Messer, Alan, Los Gatos, CA 95032 (US); Sheshagiri, Mithun, Mountain View, CA 94040 (US); Kunjithapatham, Anugeetha, Sunnyvale, CA 94086 (US); Rathod, Priyang, Mountain View, CA 94043 (US); Nguyen, Phuong, San Jose, CA 95135 (US)
(74) Representative: Robinson, Ian Michael

(57) **Abstract**

A method and system for providing sponsored content on an electronic device (102) are provided. One implementation involves, in the electronic device (102), providing sponsored content based on information locally available to the device (102), and generating an indication of said sponsored content provided on the device (102) to a compensation tracking device (103) for tracking distribution of at least a portion of compensation from a sponsor of the sponsored content to a manufacturer of the device (102) for said providing sponsored content.

## Description

### Field of the Invention

The present invention relates generally to electronic systems for providing access to content, and more particularly to systems for providing access to sponsored content.

### Background of the Invention

Proliferation of access to electronic content has resulted in an increasing number of advertiser entities, advertising broker entities and service provider entities. Such entities make up an ecosystem for generating revenue based on access to such content by users.

Advertisers sponsor content such as advertisements and infomercials, and provide such sponsored content to advertising brokers that arrange for service providers to provide such content to end users. The advertisers then pay the advertising brokers and the service providers for providing the sponsored content to end users. Service providers (e.g., a TV station/cable) typically provide such sponsored content to electronic devices, such as consumer electronics (CE) devices, in the form of media streams. On personal computer (PC) platforms, advertisements are pre-clips to video clips and Internet click-thru advertisements on web sites hosting banner advertising from an advertiser.

### Brief Summary of the Invention

According to the present invention there is provided a system, a device and a method as set forth in the appended claims. Other features of the invention will be apparent from the dependent claims, and the description which follows.

The example embodiments of the present invention provide a method and system for providing sponsored content on an electronic device. One embodiment involves: in the electronic device providing sponsored content to a user of the device based on information locally available to the device, and generating an indication of said providing sponsored content for tracking distribution of at least a portion of compensation from a sponsor of the sponsored content to a manufacturer of the device for said providing of the sponsored content.

In one exemplary aspect of the invention there is provided a system for providing sponsored content on an electronic device, comprising: (a) an electronic device including: a recommending module configured for providing sponsored content to a user on an electronic device based on information locally available to the device; and a monitoring module configured for monitoring and reporting said providing the sponsored content; and (b) a compensation module configured for tracking distribution of at least a portion of compensation from a sponsor of the sponsored content to a manufacturer of the device for said providing the sponsored content.

In one aspect, the electronic device comprises a consumer electronics device.

In one aspect, the system further includes a sponsoring determination module configured for checking for one or more sponsorship matches for certain content, wherein the recommending module is further configured for providing sponsored content by suggesting sponsored content based on said one or more sponsorship matches.

In one aspect, the sponsoring determination module is configured for checking for sponsorship matches for content further by determining one or more sponsors for the obtained content based on sponsorship relationships information, wherein the sponsorship relationships information indicates if a certain content is sponsored by a certain sponsor.

In one aspect, the accounting module is further configured for tracking distribution of at least a portion of said compensation to a manufacturer of the device based on the one or more sponsorship matches.

In another exemplary aspect of the present invention there is provided an apparatus for providing sponsored content, comprising: a recommending module configured for providing sponsored content to a user on an electronic device based on information locally available to the device; and a monitoring module configured for generating an indication of said providing sponsored content for tracking distribution of at least a portion of compensation from a sponsor of the sponsored content to a manufacturer of the device for said providing the sponsored content.

In one aspect, the monitoring module is further configured for monitoring, and generating an indication, of user access to said provided sponsored content, enabling distribution of at least a portion of said compensation to a manufacturer of the device based on the one or more sponsorship matches, for recommending the sponsored content.

In one aspect, the apparatus further includes a sponsoring determination module configured for checking for sponsorship matches for certain content, wherein the recommending module is further configured for suggesting sponsored content based on said one or more sponsorship matches.

In one aspect, the sponsoring determination module is further configured for checking for sponsorship matches for certain content further by determining one or more sponsors for the content based on sponsorship relationships information, wherein the sponsorship relationships information indicates if a certain content is sponsored by a certain sponsor.

In one exemplary aspect of the invention there is provided a method for providing sponsored content in an electronic device, comprising the steps of: providing sponsored content to a user of the device based on information locally available to the device; and generating an indication of said providing sponsored content for enabling distribution of at least a portion of compensation from a sponsor of the sponsored content to a manufacturer of the device for providing said sponsored content.

Preferably, said locally available information includes contextual information.

Preferably, the contextual information includes device context and/or user context information.

Preferably, said compensation comprises contractual compensation from the sponsor to other entities for facilitating delivery of the sponsored content to users.

Preferably, the method further comprises the steps of: in the electronic device obtaining content; and in the electronic device checking for sponsorship matches for the obtained content; wherein providing sponsored content includes suggesting obtained content based on said one or more sponsorship matches.

Preferably, suggesting sponsored content further includes suggesting obtained content that is sponsored, as indicated by the sponsorship matches. Here, checking for sponsorship matches for the obtained content further includes determining one or more sponsors for the obtained content based on sponsorship relationships information, wherein the sponsorship relationships information indicates if a certain obtained content is sponsored by a certain sponsor. Also, checking for sponsorship matches further includes: obtaining sponsorship relationships information from one or more of: the manufacturer, a sponsor and a broker; and checking for sponsorship matches using the sponsorship relationships information. Further, enabling distribution of compensation further includes, based on the sponsorship matches, distributing at least a portion of the contractual compensation from each sponsor to the manufacturer, for suggestion of their sponsored content by the electronic device. Further, enabling distribution of compensation further includes: in the device, monitoring user access to the suggested sponsored content; reporting the selection to the manufacturer; and allowing distribution of at least a portion of said contractual compensation to the manufacturer for user access to the sponsored content suggested by the device. Also, enabling distribution of compensation further includes: in the device, monitoring user selection of the suggested sponsored content; reporting the selection to the manufacturer and/or a broker engaged by a sponsor for delivery of the sponsored content to users; and allowing distribution of at least a portion of said contractual compensation from the sponsor to the manufacturer, for user selection of the sponsored content suggested by the device.

In another exemplary aspect of the invention there is provided a method for providing sponsored content on an electronic device, comprising the steps of: providing access to content of interest to a user via an electronic device; in the electronic device providing sponsored content based on the content of interest; and enabling distribution of at least a portion of compensation from a sponsor of the sponsored content to a manufacturer of the device for said providing sponsored content.

The method may include providing sponsored content includes suggesting sponsored content further based on information locally available to the device including contextual information. Suitably, said compensation comprises contractual compensation from the sponsor to other entities for facilitating delivery of the sponsored content to users.

The method may include the steps of: in the electronic device obtaining content; and in the electronic device checking for sponsorship matches for the obtained content; wherein providing sponsored content further includes suggesting content based on said one or more sponsorship matches.

In another exemplary aspect of the invention there is provided a method for providing sponsored content on an electronic device, comprising the steps of entering into a sponsoring relationship with a sponsor to provide certain sponsored content on the electronic device; in the electronic device providing sponsored content based on information locally available to the device; and based on the sponsoring relationship, enabling distribution of at least a portion of compensation from a sponsor to a manufacturer of the device for said providing sponsored content.

These and other features, aspects and advantages of the present invention will become understood with reference to the following description, appended claims and accompanying figures.

### Brief Description of the Drawings

Fig. 1 shows a functional block diagram of a local area network including electronic devices, implementing an embodiment of the present invention;
Fig. 2 shows an example compensation/revenue generating system;
Fig. 3A shows a flowchart of the steps of an example method for tracking indirect revenue generation;
Fig. 3B shows an example revenue flow in conjunction with the flowchart of Fig. 3A for indirect revenue generation;
Fig. 4 shows a functional block diagram of an end-user device implementing an aspect of an indirect revenue generating process; and
Fig. 5 shows a functional block diagram of another end-user device implementing another aspect of a revenue generating process.

### Detailed Description of the Invention

The present invention provides a method and system for providing access to content. Providing access to content includes a process for supporting indirect compensation distribution based on user access to content via electronic devices such as CE devices.

In one embodiment, a sponsored content provider (e.g., advertiser) sponsors certain content, termed sponsored content herein. The sponsored content provider enters into agreements to pay compensation to various entities to provide the sponsored content to users.

The sponsored content is then provided to a user by an electronic device based on information locally available to the device (i.e., information available to the device, made available to the device, and/or obtained by the electronic device from local and/or remote information sources).

At least a portion of said compensation from the sponsored content provider is distributed to a manufacturer of the device for providing the sponsored content.

The local information may include contextual information and/or non-contextual information, available to the device. Contextual information may include user context (e.g., user actions, history, profile) or device context (e.g., current content on the device or in the network). Non-contextual information includes such information as time or program name, without considering content of the program or user actions, history, profile, etc.

The electronic device uses such local information to determine the sponsored content to provide to the user of the electronic device. Preferably, in providing sponsored content to the user, such local information is kept private in the device or the network the device operates in. In one example, during user access to content via the device, certain sponsored content is suggested to the user by the device based on such local information. In suggesting sponsored content to the user, current context (e.g., information about the user) is kept private (i.e., not provided to other devices or entities).

Given that users spend a large amount of time engaged with electronic devices, such a process enables focused delivery of content to the device user, thereby increasing the value of content sponsorship.

Distributing said compensation may also involve sharing said compensation between the electronic device manufacturer and others such as advertising brokers, service providers, search providers, etc. The manufacturer of the electronic device may include a vendor or a supplier of the device.

In one implementation, a revenue generating process for a manufacturer of an electronic device (hereinafter "manufacturer") involves distributing at least a portion of the compensation from a sponsored content provider to the manufacturer because the sponsored content was suggested to a user by that electronic device (hereinafter "device"). Specifically, certain sponsored content is suggested to the user by the device based on information available to the device or obtained by the device.

As noted, the local information used for suggesting the sponsored content is not shared by the device with other entities in the process of suggesting the sponsored content. As a result, privacy of the user's habits/preferences is maintained. At least a portion of revenue from sponsorship, that is compensation paid by a sponsored content provider, is distributed to the manufacturer.

An example of such a revenue generation process includes distributing at least a portion of the compensation (revenue) from a sponsored content provider (an advertiser) to the manufacturer for sponsored content (click-thru advertisements) suggested to a user by the device. The revenue may also be partially distributed to providers such as involved service providers (e.g., cable), advertising brokers, search providers, etc.

In this example, in order to suggest certain sponsored content to a user on the device, the sponsored content is analyzed in relation with information available on the device side (local or client side) rather than information on a remote or server side. Specifically, the sponsored content is suggested by using local information such as user histories, context of the user, etc. Keeping such local information on the device allows maintaining privacy of information used for focused advertisements, while enabling the manufacturer to share in the revenue stream that is conventionally dispersed from the sponsored content provider to other providers/entities (advertising brokers, service providers, content providers) for advertisement distribution.

The suggested sponsored content is related to the user context. The device functions as a portal, and local information on the device is kept locally on the device for privacy. Suggesting sponsored content that is related to local information such as user context, does not require direct user request (e.g., through a keyboard) for particular content. The sponsored content providers (e.g., via advertising brokers) may target their sponsorship of content directly to the user on the device. As a result, the hit ratio of advertising funds spent is increased, because the user wishes to consume the content.

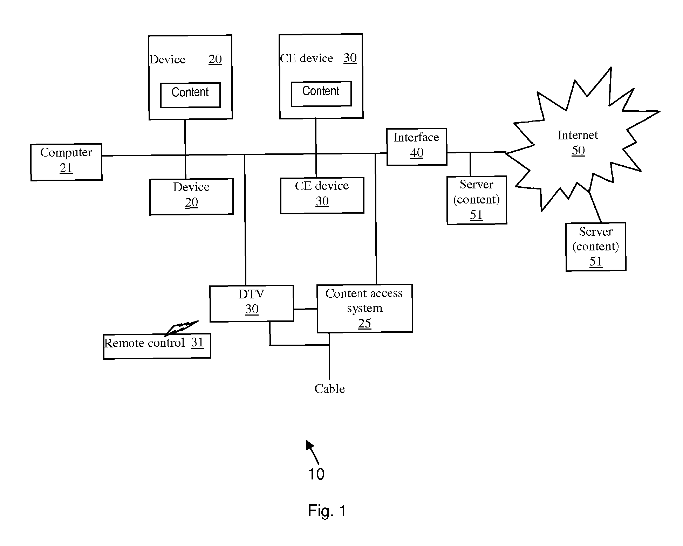

**Fig. 1** shows a functional architecture of an example network, such as a local area network (LAN) 10 in a home environment, embodying aspects of the present invention. The network 10 comprises devices 20 (e.g., appliances, databases, storage devices) which may include local content, a PC 21, CE devices 30 (e.g., TV, DTV, PDA, media player) which may include local content, and an interface 40 that connects the network 10 to an external network 50 (e.g., data sources, the Internet). The network 10 may also be connected to one or more servers 51, as shown. Though the example described hereinbelow relates to the CE devices 30, the present invention is equally applicable to other devices. One or more devices 30 can implement the Universal Plug and Play (UPnP) protocol for communication therebetween. The present invention is useful with other network communication protocols (e.g., Jini, HAVi, IEEE 1394). Further the network 10 can be a wireless network (e.g., IEEE 802.11), a wired network (e.g., Ethernet, IEEE 1394), or a combination thereof.

The network 10 further provides a content access system 25 that implements a revenue generating process, according to an embodiment of the present invention. In one example, the DTV 30 is the end-user device (content-use device) for access to content, wherein the content access system 25 can be implemented as a stand-alone module or in the DTV 30. The content access system 25 and the DTV 30 have access to the Internet, cable, etc. In another example, the content access system is implemented in the DTV 30, wherein the DTV 30 is not part of a LAN, but has access to the Internet, cable, etc.

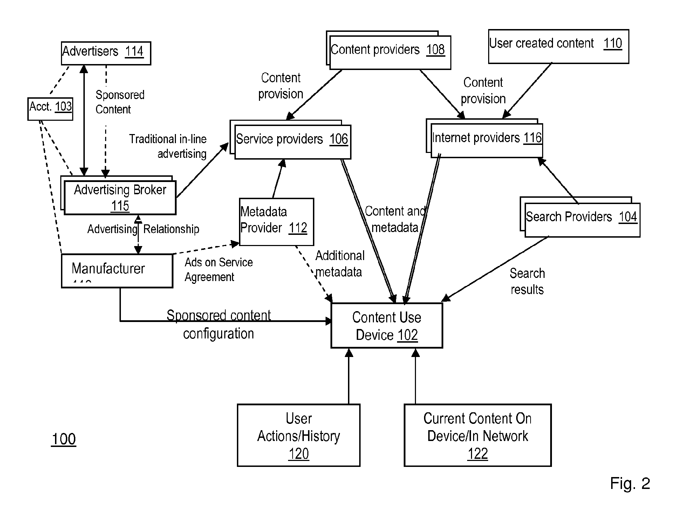

**Fig. 2** shows an example revenue generating system 100, wherein an end-user device 102 (e.g., DTV 30 in Fig. 1) implements the functionality of the content access system 25, according to an embodiment of the present invention. In the system 100, search provider devices 104 provide aggregate access to content from multiple sources such as the Internet and other service provider devices 106. Content can originate from, e.g., commercial sources such as commercial content provider devices 108, or user created/generated content 110. Some service provider devices 106 provide limited metadata, often necessitating use of third party metadata provider devices 112 (e.g., electronic program guide (EPG), media information) to provide information about content.

Sponsored content providers such as advertiser devices 114 work with advertising broker devices 115 which in turn engage service provider devices 106 for sponsored distribution, such as traditional in-line advertising (e.g., TV commercials or banner advertisements on the web).

Further, the service provider devices 106 and Internet access provider devices 116 provide their services to users via the end-user device 102. Such services may be in the form of providing, e.g., web content, media clips or streaming content. Metadata provider devices 112 may be associated with manufacturer devices 118 of the manufacturer (vendor/supplier) of the end-user device 102, or with the service provider devices 106 to provide additional information. Since the potential information available is large, the content access system also allows the end-user device 102 to gain listings of sponsored content from one or more search provider devices 104 (such as web or media results based on an input). In one example, the device 102 fetches sponsored content items through search provider devices 104.

Optional advertisements (Ads) on service agreement refers to the possibility that advertisements are coordinated with a service provider (e.g., Comcast). For example, a service provider has an agreement with advertisers and wishes to have that as part of the advertising selected, or that revenue is shared with the service provider for access to their user base. Lastly, the service provider might advertise its own content (such as archives or premium content) as part of the relationship.

The device manufacturer has an advertising relationship with the advertising brokers. The manufacturer cooperates with the advertising brokers to obtain sponsorship relationships information for potential sponsored content. For example, the sponsorship relationships information (advertising relationships information) includes information about which advertiser sponsored which advertisement, and about how revenue from an advertiser for facilitating referral of its advertisements should be distributed, etc.

Using sponsorship relationships information, the manufacturer device 118 sends configuration information to the end-user device 102 (e.g., via a communication link such as the Internet) to configure the device 102. The configuration information includes the current set of sponsorship relationships information which allows the device 102 to determine sponsorship matches for the fetched sponsored content that the device 102 may suggest to the user.

The end-user device 102 may also make requests to the manufacturer device 118 (or the advertising broker devices 115) for sponsorship relationships information for sponsored content that the device 102 may suggest. In one example, suggested sponsored content is related to local information, such as the current device context or user context. The device/user context may be obtained from other devices as well. The device 102 suggests sponsored content that the user may find of high relevance, based on local information including user context 120 (e.g., user actions, history, profile) or device context 122 (e.g., current content on the device or in network). For example, the device 102 may suggest sponsored content based on user context such as current user activity (e.g., time of a TV program being watched on the device 102 or title of a CD being played on the device 102), or device context based on the current user activity (e.g., context extracted from closed captions or EPG information of the TV program being watched), a combination thereof, or other means.

The device 102 suitably generates a list of content results for the user. The content results may include suggested sponsored content and non-sponsored content. In suggesting sponsored content, the device 102 may use changes in ranking, highlighted positioning (e.g., the sponsored content may have visual emphasis over other content) or other means to combine the sponsorship matches information with the sponsored content information. The device 102 may change the list of content results to include sponsored content at a particular position in the list to promote its viewing (e.g., placing the related content at the top of the list). In one example, some suggested sponsored content may not have associated sponsorship matches. As such, when the user selects among the suggested sponsored content (such as keywords), if the selected sponsored content matches certain sponsoring relationship information, the device 102 contacts the manufacturer device 118 (the device 102 may also contact the advertising broker device 115 based on sponsoring matches). This transaction causes the manufacturer device 118 to record information about the selected sponsored content (advertising).

Using this information, an accounting module (or compensation module) 103 allows at least a portion of the compensation from the advertiser 114 for distribution of the sponsored content (suggested by the device 102) to be provided to the manufacturer (by prior agreement/contract) because the suggestion of the sponsored content by the device 102, directed (referred) users to that sponsored content. The compensation generated by this transaction may be shared among the manufacturer, the service provider, the advertising broker, etc. For example, an advertiser may be a cable company that may generate $2.00 from a video-on-demand (VOD) movie that is suggested as sponsored content by a device 102 (e.g., TV). Based on agreement, the TV manufacturer may receive 20% of the $2.00 revenue.

The accounting module 103 may include tracking modules for receiving the tracked information about user access to suggested sponsored content on the device 102 and utilize that information, and sponsoring information, to distribute the compensation from the sponsor accordingly. The accounting module 103 may be a system maintained by one or more of: the manufacturer, advertiser, the advertising broker, etc. The accounting module 103 together with the advertising broker, manufacturer or other entities form a compensation module that allows for distribution of at least a portion of compensation from a sponsor of the sponsored content, to a manufacturer of the device, for suggestion of the sponsored content by the electronic device to a user of the device 102.

An example process is now described in relation to Fig. 2. Initially sponsored content providers such as advertisers engage advertising brokers to get certain sponsored content, such as advertisements, associated with a means of finding it. The brokers can achieve this through search providers that provide search engines for information searching.

The device manufacturer enters into agreements (e.g., with advertisers, with advertising brokers or with search providers) for sharing revenue for facilitating user access to content sponsored by the advertisers, suggested to the user on the device 102. The manufacturer may have relationships with the advertisers, which once set-up, allows for sponsorship matching.

The advertising broker and manufacturer agree to share revenue from the advertiser, for referrals to sponsored content by the device 102. Sponsoring relationships information may be provided to the manufacturer (e.g., periodically) or on demand, to account for revenue sharing. This process may use an existing interface for advertising brokerage (e.g., Google AdWords).

The search providers may agree to provide access to content through a specific application programming interface (API) or to provide raw (not processed for sponsorship) results. A search provider may also simply provide a web interface for this process.

In one scenario, a user uses the device 102 and requests content, be it related to existing content (e.g., user/device context) or to content in general. Based on the request, the device 102 fetches results (e.g., from content provider devices 104, 106, 116) to present to the user as a content result list. The content results may be organized based on the context of the device, from search results, from metadata providers or other information.

Based on the result content list, the device 102 makes a request to the manufacturer device 118 (or the advertising broker device 115) for sponsoring matches corresponding to the result content list entries. The device 102 may also determine such sponsoring matches beforehand, such as when the device 102 is pre-configured with sponsoring relationships information using sponsored content configuration information, in order to locally determine sponsoring matches corresponding to the result content list entries, without sending requests to the manufacturer device 118 (or advertising broker device 115). The sponsored content configuration information may be transmitted (e.g., downloaded via communication links) to the device 102 by the manufacturer device 118 upon request by the device 102, or transmitted to the device 102 without a request by the device 102. Further, the sponsored content configuration information may be pre-stored in memory in the device 102.

The device 102 combines the local information (e.g., device/user context), the result content list, and the sponsoring matches into a revised content list that suggests sponsored content (such as higher ranking of the content entries that have sponsorship matches (i.e., sponsored content), emphasizing sponsored content, inserting sponsor information, or other means).

The current and past device/user context (e.g. closed captions and user history) may be used to select sponsored content most relevant to such context, then depending on a ranking metric, that sponsored content is suggested on the device 102, e.g., by either adding such sponsored content to the content list (merged in) on a display screen or highlighting sponsored content already on a screen at the appropriate place/time.

In a pay-per-click model, the user of the device 102 then selects content based on the revised content list which includes suggested sponsored content. For example, the list can be a list of song titles, and the user selects a song title that is sponsored by an advertiser 114. Based on the sponsoring relationship information matches, the device 102 makes a record of the user selection with the manufacturer device 118. Recording of the user selection may also be performed directly with the advertising broker device 115 or by a third party means, as long as there is a record of the sponsoring relationship being exercised (i.e., sponsored content was suggested by the device 102).

The selected sponsored content is obtained from, e.g., the Internet providers 116, content providers 108, etc. Alternatively, the selected content may be obtained before the device 102 makes a record of the user selection.

Thereafter, the advertising broker shares revenue from the advertiser that sponsored the selected sponsored content, with the device manufacturer. Some revenue may be also shared with other parties such as the search providers, service providers, etc. In another example, involving a pay-per-show model, revenue is generated simply from suggesting sponsored content to the user on the device 102. As such, it is not required that the user select a suggested sponsored content for the manufacturer 118 to receive at least a portion of compensation from the advertiser 114 for distribution of its sponsored content.

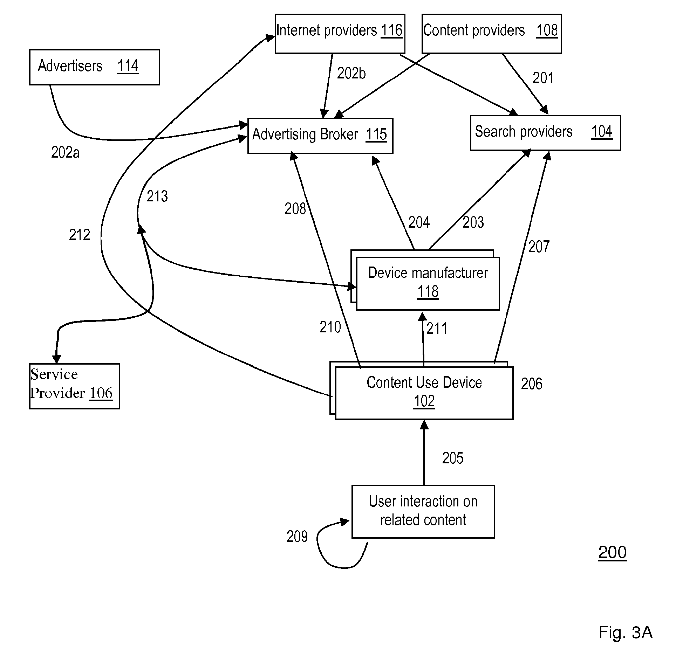

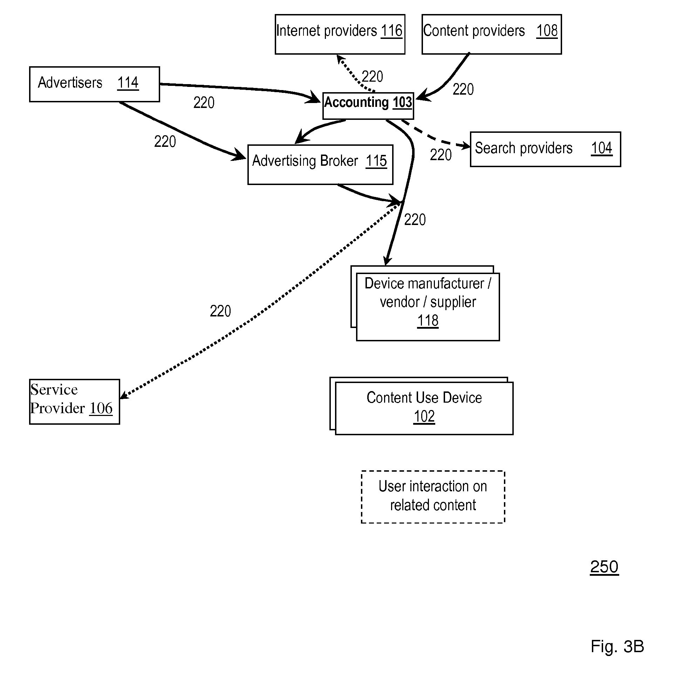

**Fig. 3A** shows the steps of an example process 200 for tracking indirect revenue generation, according to the present invention. Fig. 3B shows an example process 250 of tracking revenue flow in conjunction with the flowchart of Fig. 3A. The process 200 includes the following steps:
*Step 201:* The content providers using devices 108 enter into arrangements with the search providers using devices 104 for sponsoring keywords to be listed along with the search engine results. This provides the non-advertising content related to particular topics.
*Step 202a:* Advertisers associate advertisements with advertising brokers using devices 115 based on a set of criteria such as keywords or topics for each advertisement. In one case the content providers using devices 108, acting as advertisers, associate their content with one or more advertising brokers who use the devices 115. Providers are often willing to pay for access to their content (e.g. to get commercials or to drive revenue by other means such as viewership).
*Step 202b:* The advertisers associate advertisements with the advertising brokers based on a set of criteria such as keywords or topics for each advertisement. Companies that generate non-electronic media (not Internet content or media) generate advertisement materials in electronic forms to advertise those services or products with the user. These are traditional advertisers, such as Nike or Johnson & Johnson.
*Step 203:* The manufacturer (vendor/reseller) using the devices 118 enters into arrangements with the search providers 104 for access to content. In doing so, search providers may agree to provide access through a specific API or to provide raw (not processed for sponsorship) results. However, a search provider may simply provide a web interface with the usual processing for this process.
*Step 204:* Manufacturer (vendor/reseller) 118 enters into agreements (contracts) with an advertising broker 115 for access to sponsorship relationships information. Suitably, the advertising broker and the manufacturer agree to share revenue for referrals. Relationship information may be given to the manufacturer (for example periodically) or on demand. Likewise, this process may use an existing interface for advertising (e.g. Google AdWords).
*Step 205:* The user accesses content using the content-use device 102.
*Step 206:* Based on the content accessed, the device 102 determines the keywords related to the user context and proceeds to fetch related information based on that context (i.e., the user requests content, be it related to existing content (e.g., context) or content in general).
*Step 207:* The device 102 makes requests to the search provider devices 104 to obtain such related information (i.e., the device fetches content results to present to the user in order to suggest certain content to the user. These content results may be found by the context of the device, search results, metadata providers or other information).
*Step 208:* The device 102 requests the manufacturer device 118 (and/or advertising broker device 115) for a list of sponsored keywords for the device 102. The device 102 displays the sponsored keywords for user selection. Based on the content, the device makes a request to the manufacturer device 118 (or advertising broker device 115) on the sponsored information for the content list entries. This step may occur as part of step 203 (as well) where the device determines relationships beforehand. Also, the device in step 203 may have been pre-configured with relationship information and so can make the determination locally. Essentially in step 208 a list of keywords are obtained based on the current content (e.g. closed captions), user history, etc.
*Step 209:* The set of keywords is used to pull advertisements and content (from search or direct from content providers), providing a set of content (and keywords depending on the user interface (UI)) for the user to browse and select. The device combines local information, the content list and the sponsorship information as it deems appropriate. This may be by ranking the sponsored content more highly, emphasizing sponsored content, inserting sponsored information or other means.
*Step 210:* The user selects the content based on the revised sponsored content list. If the user clicks on a sponsored content, then revenue sharing is done. If not, it is a normal access to the content (broadband or broadcast, etc.).
*Step 211:* The device 102 records keyword click-through with the device manufacturer device 118 and/or the broker device 115. This could also be performed directly with the advertiser device 114 or a third party device (as long as there is a record of the relationship being exercised).
*Step 212:* The selected content is accessed from the Internet or content providers. The device 102 contacts the Internet provider 116 (or the content providers 108). The content (or advert) is accessed via the device 102 as usual, via the Internet or other means (broadcast), such as by making an Internet request for the content (HTTP/RTSP for a stream) or tuning to a broadcast, or displaying a web page, etc. Steps 211 and 212 can be reversed.
*Step 213:* An accounting module 103 (Fig. 3B) provides that click through compensation/revenue 220 (Fig. 3B) from content providers 108 is shared between the advertisers 114, the device manufacturer 118, the service providers 106, and any involved provider (e.g., search providers 104, broker 115). As such, at some date (instantaneously or at a later date) the advertiser 114 shares revenue with the device vendor/reseller. At this point, some revenue may be shared with other parties that form the ecosystem such as search providers, service providers, etc.

In step 211, the device 102 records a selection event on the suggested sponsored content with the manufacturer 118 and the advertising broker 115 is also informed of the event in order to receive revenue from the advertiser 114, based on the sponsoring agreement. In step 213, the manufacturer 118 checks the log with the advertising broker 115 and determines that the advertiser 114 paid a certain sum for the user selection of the suggested sponsored content to the advertising broker 115. Based on the sponsorship matches, the manufacturer 118 is provided a portion of the revenue earned by the advertising broker 115 from the advertiser 114.

The functionality of the device 102 for suggesting sponsored content may be implemented in another device such a cable set-top-box (STB) leased to a user by a service provider 106 (e.g., cable service provider) to provide advertisements (sponsored content) to the users. The service provider 106 in this instance shares in the compensation paid by the advertiser 114 because the STB suggested sponsored content of the advertiser 114 to the user. Likewise, the manufacturer of the STB receives a portion of that compensation. Further, any broker 115 may also receive a share of the compensation, and so on.

An example implementation involves a device 102 that recommends content to a user based on the current context/content, as described below. Advertising brokers (e.g., Google AdWords) are engaged by sponsored content providers (advertisers) to find keywords related to particular sponsored content (e.g., web sites, media). For example, the Federal Emergency Management Agency (FEMA) as an advertiser sponsors keywords "Hurricane Katrina", such that searches on "Hurricane Katrina" in Google AdWords show sponsored information from FEMA, in addition to other related search results. "Hurricane Katrina" is also sponsored by CNN as an advertiser, and further "New Orleans" is sponsored by the New Orleans tourism agency as an advertiser, and also by FEMA as an advertiser.

The device manufacturer 118 enters into an advertising relationship with the advertising broker 115. The manufacturer 118 cooperates with the advertising broker 115, to obtain sponsorship relationships information for potential sponsored content. For example, the sponsorship relationships information (advertising relationships information) includes information about which advertiser sponsored which advertisement, and about how revenue from an advertiser for facilitating referral of its advertisements should be distributed, etc.

Independently, the device 102 uses the current local information, such as, a documentary video show about "Hurricane Katrina" that is being watched by a user of the device 102, to determine context. The time of the show indicates this is a "Hurricane Katrina" program and context in the closed captions of the show indicates "New Orleans" and other subjects. The device 102 generates search requests to the advertising broker devices 115 and/or the search provider devices 104 for content on "Hurricane Katrina" and "New Orleans". The search results are collected into a content result list to fulfil potential interests of the user.

Using sponsoring relationship information (e.g., from the manufacturer device 118), the device 102 determines sponsoring matches for the search results. Based on the sponsoring matches, the device 102 determines that "Hurricane Katrina" is sponsored by FEMA to refer the user to fema.org, and is also sponsored by CNN, and that "New Orleans" is sponsored by the New Orleans tourism agency and also by FEMA.

Based on the search results, the sponsoring matches and the context (e.g., user preferences/history), the device provides to the user a content list including suggested sponsored content as a link to fema.org, and suggested sponsored content to the New Orleans tourism office. The content list also includes other search results for "Hurricane Katrina" and "New Orleans".

The user decides to select "Hurricane Katrina" and the fema.org link in the content list. As the user selections are made, based on the sponsorship matches, the device 102 notes the advertising referral/relationship (i.e., "Hurricane Katrina" is sponsored by FEMA to refer the user to fema.org, and is also sponsored by CNN). The device 102 either immediately, or at a later time, records these selections with the manufacturer 118 (and/or advertising broker 115). The device 102 then takes the user directly to the selected content, such as by obtaining the selected content from an Internet provider 116 and/or service provider 106.

FEMA as an advertiser in this case, pays for suggesting the fema.org link to the user and/or referring the user to the fema.org link, which exposed the user to FEMA. Here, the user may spend time in front of the consumer electronics device (e.g., a CE device such as a TV) learning about FEMA. At least a portion of the compensation from FEMA for this suggestion and/or referral is provided to the manufacturer (based on an existing agreement) and the compensation may also be shared with the advertising broker 115 and others (e.g., search provider 104) involved in enabling distribution of the FEMA sponsored content (i.e., fema.org link) to the device 102.

In one example, the device 102 contacts the manufacturer device 118 (the device may also contact the advertiser device 115 based on sponsoring matches). This transaction causes the manufacturer device 118 to record information about the selected sponsored content (advertising). Using this information, at least a portion of the compensation from the advertiser 114 for distribution of the sponsored content (suggested by the device 102) is provided to the manufacturer 118 (by prior agreement/contract) because the suggestion of the sponsored content by the device 102, directed (referred) users to that sponsored content.

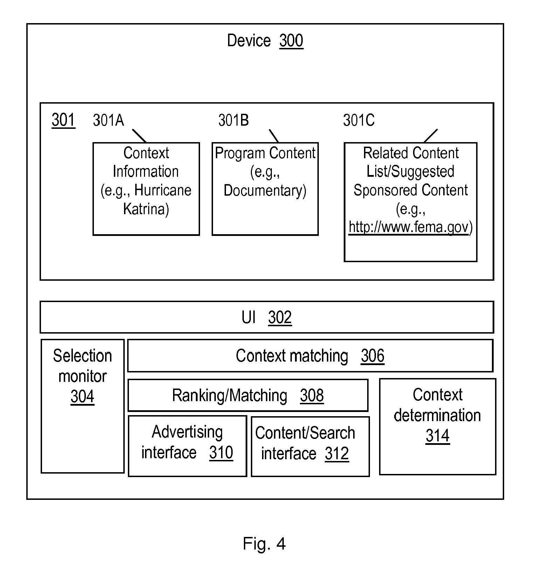

**Fig. 4** shows a functional block diagram of an implementation of the device 102 as a content device 300 implementing an aspect of the revenue generation tracking process. The device 300 implements a user interface (UI) 302 function, a selection monitor function 304, a context matching function 306, a ranking/matching function 308, an advertising interface function 310, a content/search interface function 312 and a context determination function 314. The functions of the device 300 can be implemented as software modules or as dedicated hardware modules.

The advertising interface 310 obtains keywords and advertisements (sponsored content) from the advertising broker device 115 (see Fig. 2). The context determination function 314 determines the current context (e.g., based on user/content information on the device 300, closed captions, EPG, media being played, user profile, history of user interaction with content, etc.).

The context matching function 306 uses the current context to find content relevant to the current context, using the content/search interface 312 which searches for information from the search providers 104.

The ranking/matching function 308 determines sponsorship matches for the search results that were obtained in relation to the current context, to determine sponsored content among the search results. The ranking/matching function 308 also ranks sponsored content based on the current context to match the interests of the user. For example, the ranking/matching function 308 sorts through the search results, which include advertisements, and suggests advertisements based on sponsoring matches and current context, by placing the advertisements and content together in a content list, either based on relevance with the current context or prioritizing content or adding advertisements to the content list.

The UI 302 interacts with the user for the content in the context and records user selections (e.g., click-thru) using the selection monitor 304. The UI 302 monitors advertising usage (selection of sponsored content by the user) and reports such usage to the manufacturer device 118 for revenue generation and sharing. The content/search interface 312 obtains selected content from the content providers 108.

An example scenario for device 300 involves a case where FEMA as an advertiser 114 decides that when hurricanes are discussed on TV programs watched by users, then FEMA hurricane preparedness content should be advertised to the users as sponsored content. Therefore, FEMA enters into a sponsoring relationship with an advertising broker 115. According to the sponsoring relationship, FEMA pays for user clicks on the keyword "hurricane" and referring users to: http://www.fema.gov. The sponsoring relationship also includes an agreement, wherein the device manufacturer 118 shares in said payments from FEMA when the device 300 suggests the FEMA sponsored content (http://www.fema.gov). Such payment to the manufacturer 118 may be made contingent on the user selection (clicks-thru) of that suggested sponsored content.

In one example, a user is watching a TV program on the device 300 (e.g., DTV 30 in Fig. 1), which is a documentary about New Orleans, and in that program, Hurricane Katrina is mentioned. The context determination function 314 determines the current context in part by extracting context information including, e.g., "New Orleans" and "Hurricane Katrina", from the TV program (e.g., from closed captions or metadata, for the documentary). When the user presses the "more info" button on a remote control 31 (Fig. 1) for more information about the topic of the documentary, the UI 302 displays said context information to the user. The context matching function 306 uses the current context to find content relevant to the current context, using the search interface 312. Specifically, the context matching function 306 uses the content/search interface 312 to submit searches to the advertising brokers 115 and search providers 104 for searching information related to the context information.

Referring again to Fig. 4, in one example display screen 301 generated by the UI 302, a middle TV screen area displays the documentary TV program content 301 B and a left TV screen area displays the context information 301 A for the program content. The user then uses the remote control buttons to select "Hurricane Katrina" from the context information, whereupon search results obtained by the content/search interface 312 for "Hurricane Katrina" are displayed on a right TV screen area as a related content 301C list, by the UI 302.

Based on inquiry by the advertising interface 310 into sponsoring relationships information (from the manufacturer 118 or the broker 115), in this example the advertising interface 310 determines sponsoring matches indicating that FEMA is the sponsor for the sponsored keyword "Hurricane". As a result, the ranking/matching function 308 suggests sponsored content by placing the sponsored content from FEMA (i.e., the link http://www.fema.gov) at the top of the content list 301C, or in another visible location, on the screen of the UI.

The user then uses the remote control keys to select the sponsored content from FEMA (i.e., the link http://www.fema.gov). The device 300 displays the web page at the link http://www.fema.gov to the user on the TV screen. While that web page is displayed, the selection monitor 304 records a selection event (click-thru) on the sponsored content link http://www.fema.gov, with the manufacturer 118 of the device 300. The device 300 can upload the sponsored content selection event to the manufacturer log either immediately or at a later time. The advertising broker 115 is also informed of that sponsored content selection event in order to receive revenue from the advertiser FEMA 114, based on the sponsoring agreement.

The manufacturer 118 checks the log with the advertising broker 115 and determines that FEMA paid a certain sum (e.g., 50 cents) for the user selection of the sponsored content link http://www.fema.gov, to the advertising broker 115. Based on the sponsorship matches, the manufacturer 118 is provided a portion of the revenue earned by the advertising broker 115 from FEMA.

Many other embodiments are possible, such as finding content related to content in the network 10 (Fig. 1), user history of interaction 120 (Fig. 2) with various content, etc. Sponsorship information is dynamic and may involve more than mere product placement. For example, as described, FEMA may sponsor the keyword "hurricane" in order to provide information to users in the event of a hurricane emergency. By contrast, conventional approaches provide fixed sponsored relationships such as links on PC desktops or logos placed on a laptop, representing a static product placement.

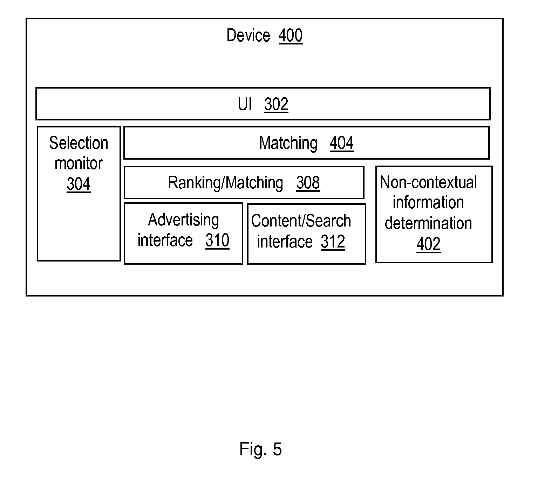

Further, though in the above example the device 300 uses program context (e.g., closed captions, or metadata related to the main program) in searching for, and then recommending sponsored content, another device 400 shown in **Fig. 5** (a variation of device 300 in Fig. 4), implements a non-contextual information function 402 to determine non-contextual information such as EPG information (e.g., time/program), without considering closed caption decoding, user history, etc. The non-contextual information is used by a matching function 404 to search for content via the content/search interface 312, to suggest to the user (e.g., search results and sponsored content) for user selection and tracking of revenue sharing, as described.

In another variation, the content may be associated by the advertising provider and not in general search results from search providers. General search results from search providers (e.g., Google, Yahoo) refer to content that may not be sponsored (e.g., Google). In another example, sponsored content may be determined on the current context directly, without performing searches. Or, the device may have sponsored content sent to it from the sponsored content provider (advertiser) 114 for display to the user when the user presses the "more info" button, wherein an advertising broker 115 is not part of the sponsoring relationship (the click-thru revenue from the sponsored content provider 114 is provided to the manufacturer 118 and not shared with a broker).

The local information discussed above may also include main content which comprises content of interest to the user. This can be content that the user selects for access, such as a video program that the user may want to watch (e.g., content of a TV program, a DVD). The local information may also include content information, related to main content, which the device searches for and lists for the user as a content result list.

Further context may include information about what the user is doing on the electronic device, and may further include information about the user (e.g., preferences, history). An example is where the user is watching a TV show (main content) in which a character is going to the dentist. Context is found from that main content (e.g., from closed captions), and used to determine (search for) related information to provide as a content list. In another example, the main content (e.g., what the user is currently watching) is not used as context, and rather user history 120 (Fig. 2) or user profile (e.g., preferences, interests) is used as context to then determine (search for) related information to provide to the user. For example, the device may obtain content directly from certain providers, rather than search for content related to the main content.

As is known to those skilled in the art, the aforementioned example architectures described above, can be implemented in many ways, such as program instructions for execution by a processor, as logic circuits, as an application specific integrated circuit, as firmware, etc. The present invention has been described in considerable detail with reference to certain preferred versions thereof; however, other versions are possible. Therefore, the scope of the appended claims should not be limited to the description of the preferred versions contained herein.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A content access system for providing content to a user, the system comprising:
a plurality of end-user electronic devices (102), each of which include a recommending module (308) configured for providing sponsored content for display to a user based on information locally available to the device (102); and a monitoring module (304) configured for monitoring said sponsored content and generating a report relating to the sponsored content; and
a compensation module (103) configured for tracking distribution of at least a portion of compensation from a sponsor of the sponsored content to a manufacturer of the device with respect to the reports generated by the plurality of end-user devices (102) relating to the sponsored content.

2. The system of claim 1, wherein the end-user electronic device (102) comprises a consumer electronics device.

3. The system of claim 1 or 2, wherein the end-user devices (102) each further include a sponsoring determination module (308) configured for checking for one or more sponsorship matches for certain content, wherein the recommending module (308) is further configured for providing sponsored content by suggesting sponsored content based on said one or more sponsorship matches.

4. The system of claim 3, wherein the sponsoring determination module (308) is configured for checking for sponsorship matches for content further by determining one or more sponsors for the obtained content based on sponsorship relationships information, wherein the sponsorship relationships information indicates if a certain content is sponsored by a certain sponsor.

5. The system of claim 4, wherein the compensation module (103) is further configured for tracking distribution of at least a portion of said compensation to a manufacturer of the device based on the one or more sponsorship matches.

6. An end-user device (300) for providing sponsored content to a user, comprising:
a recommending module (308) configured for providing sponsored content to a user based on information locally available to the device (300); and
a monitoring module (304) configured for generating an indication of said sponsored content for enabling tracking of distribution of at least a portion of compensation from a sponsor of the sponsored content to a manufacturer of the device for providing said sponsored content.

7. The apparatus of claim 6, wherein the monitoring module (304) is further configured for monitoring, and generating an indication, of user access to said provided sponsored content, thereby enabling tracking of distribution of at least a portion of said compensation to a manufacturer of the device based on the one or more sponsorship matches, for recommending the sponsored content.

8. The apparatus of claim 7, further including a sponsoring determination module (308) configured for checking for sponsorship matches for certain content, wherein the recommending module is further configured for suggesting sponsored content based on said one or more sponsorship matches.

9. The apparatus of claim 8, wherein the sponsoring determination module (308) is further configured for checking for sponsorship matches for certain content by determining one or more sponsors for the content based on sponsorship relationships information, wherein the sponsorship relationships information indicates if a certain content is sponsored by a certain sponsor.

10. A method for providing sponsored content in an electronic device (102), comprising the steps of:
providing sponsored content for display to a user of the device (102) based on information locally available to the device (102); and
generating a report of said sponsored content for enabling tracking of distribution of at least a portion of compensation from a sponsor of the sponsored content to a manufacturer of the device for providing said sponsored content.

11. The method of claim 10, wherein said locally available information includes contextual information.

12. The method of claim 11, wherein the contextual information includes device context and/or user context information.

13. The method of any of claims 10 to 12, wherein said report provides tracking of compensation concerning contractual compensation from the sponsor to other entities for facilitating delivery of the sponsored content to users, by sending the report from the device (102) to a compensation module (103) in a compensation tracking device (115, 118).

14. The method of claim 13 further comprising the steps of:
in the electronic device (102), obtaining content; and
in the electronic device (102), checking for sponsorship matches for the obtained content;
wherein providing sponsored content includes suggesting obtained content based on said one or more sponsorship matches.

15. The method of claim 14, wherein suggesting sponsored content further includes suggesting obtained content that is sponsored, as indicated by the sponsorship matches.

16. The method of claim 15, wherein checking for sponsorship matches for the obtained content further includes determining one or more sponsors for the obtained content based on sponsorship relationships information provided to the device (102), wherein the sponsorship relationships information indicates if a certain obtained content is sponsored by a certain sponsor.

17. The method of claim 16, wherein checking for sponsorship matches further includes:
obtaining sponsorship relationships information from one or more of a manufacturer device (118), a sponsor device (114) and a broker device (115); and
checking for sponsorship matches using the sponsorship relationships information.

18. The method of claim 16 or 17, wherein tracking distribution of compensation further includes, based on the sponsorship matches, tracking distribution of at least a portion of the contractual compensation from each sponsor to the manufacturer, for suggestion of their sponsored content by the electronic device (102).

19. The method of claim 18, wherein tracking distribution of compensation further includes:
in the device (102), monitoring user access to the suggested sponsored content;
reporting the access to the compensation module (103) in a manufacturer device (118); and
tracking distribution of at least a portion of said contractual compensation to the manufacturer for user access to the sponsored content suggested by the device (102).

20. The method of claim 18, wherein tracking distribution of compensation further includes:
in the device (102), monitoring user selection of the suggested sponsored content;
reporting the selection to the compensation module (103) in a manufacturer device (118) and/or in a broker device (115) engaged by a sponsor for delivery of the sponsored content to users; and
tracking distribution of at least a portion of said contractual compensation from the sponsor to the manufacturer, for user selection of the sponsored content suggested by the device (102).

21. A method for providing sponsored content on an electronic device, comprising the steps of:
providing access to content of interest to a user via an electronic device (102);
in the electronic device (102), providing sponsored content based on the content of interest; and
tracking distribution of at least a portion of compensation from a sponsor of the sponsored content to a manufacturer of the device (102) for said providing sponsored content.

22. The method of claim 21, wherein providing sponsored content includes suggesting sponsored content further based on information locally available to the device (102) including contextual information.

23. The method of claim 21 or 22, wherein said tracking includes tracking of contractual compensation from the sponsor to other entities for facilitating delivery of the sponsored content to users of the device (102).

24. The method of claim 21, 22 or 23, further comprising the steps of:
in the electronic device (102) obtaining content; and
in the electronic device (102) checking for sponsorship matches for the obtained content;
wherein providing sponsored content further includes suggesting content based on said one or more sponsorship matches.

25. A method for providing sponsored content on an electronic device (102), comprising the steps of:
recording sponsorship relationship information concerning a sponsoring relationship with a sponsor to provide certain sponsored content on the electronic device (102);
in the electronic device (102) providing sponsored content based on information locally available to the device; and
based on the sponsoring relationship information, tracking distribution of at least a portion of compensation from a sponsor to a manufacturer of the device (102) for said sponsored content provided on said device (102).
